# EUROPEAN PATENT APPLICATION

(11) **EP 4 647 997 A1**
(43) Date of publication of application: **12.11.2025**
(21) Application number: 24174949.8
(22) Date of filing: 08.05.2024
(51) Int. Cl.: G06Q 30/02, G06Q 20/10, G06Q 20/14

(54) **SYSTEMS AND METHODS FOR BILL MANAGEMENT VIA A CENTRAL NETWORK**

(71) Applicant: Mastercard International Incorporated, Purchase, NY 10577 (US)
(72) Inventor: UPADHYE, Nilesh, Chelmsford (GB); RAYMENT, Emma, Hemel Hempstead (GB); KAMAL, Mohammed, Paramus (US)
(74) Representative: Murgitroyd & Company

(57) **Abstract**

A method of bill management by a central network. The method comprising the steps of: receiving, from a first system, a first message comprising: a first identification parameter; and a second identification parameter; sending, to a second system, the first identification parameter and the second identification parameter; receiving, from the second system, a first request comprising the first identification parameter, the second identification parameter, and action request data; and performing an action based on the action request data.

## Description

### FIELD OF THE DISCLOSURE

The present disclosure relates to the field of electronic bill payment and, more specifically, to electronic bill payment using a central payment network.

### BACKGROUND

Consumers are conducting an increasing amount of business online, including payment of bills. Conventionally, bills are paid by a process in which the consumer navigates to payment platforms associated with each of their bills. In some situations, for example where the consumer has three separate bills to pay associated with three separate biller entities, the consumer must navigate to three separate bill document stores, each associated with a respective biller entity. The consumer must remember three separate account logon credentials to access and view electronic copies of the bills and/or to manage subsequent payment preferences (for example, subsequent bill payment dates and/or amounts).

Such bill payment and review processes can be unwieldy and can lead to negative consumer experiences.

The present disclosure has been devised to mitigate or overcome at least some of the above-mentioned problems.

### SUMMARY OF THE DISCLOSURE

In accordance with a first aspect of the present disclosure, there is provided a method of bill management by a central network, the method comprising the steps of: receiving, from a first system, a first message comprising: a first identification parameter; and a second identification parameter; sending, to a second system, the first identification parameter and the second identification parameter; receiving, from the second system, a first request comprising the first identification parameter, the second identification parameter, and action request data; and performing an action based on the action request data.

The central network may be a payment processing network configured to process payment card transactions (for example, bill payments). The first system may be a merchant platform associated with a merchant or biller that provides a service or product to a consumer. The first system may also comprise an acquirer platform operated by, or associated with, a payment account or bank account associated with the merchant or biller. The second system may be a card issuer platform operated by, or associated with, a card issuer that has issued a payment card to the consumer.

The central network may provide a centralised means for a consumer to manage bills associated with a merchant or biller. In particular, the central network may provide a means for the consumer to interact with (for example view and/or modify) a bill associated with a merchant or biller without having to interact with applications associated with the merchant or biller. This may be particularly advantageous in situations wherein the consumer has bills to pay for three separate biller or merchant entities. In particular, the consumer may interact with these bills via a central mechanism (i.e., central network), requiring only a single access point (e.g., a mobile application associated with the central network). The consumer does not have to remember three separate logon credentials to interact with the respective bills and instead requires only a single set of logon credentials to access the mobile application associated with the central network.

In some embodiments, the method further comprises: prior to sending the first identification parameter and the second identification parameter to the second system, storing, on a central server, a record of receipt; after sending the first identification parameter and the second identification parameter to the second system, storing, on the central server, a record of transmission. The records of receipt and transmission may be used by the central network to later verify an action request.

In some embodiments, the method further comprises: storing, on the central server, an index for linking the record of receipt with the record of transmission. This index may facilitate subsequent verification of the action request by allowing the central network to identify a flow of first and second identification parameters.

In some embodiments, the method further comprises: receiving, from the first system, a second message comprising a Public Key request; and sending, to the first system, a Public Key associated with the central network. The second message may be part of the first message. Thus, the Public Key associated with the central network may be shared with the first system and may be used for subsequent authentication.

In some embodiments, the action request data comprises data indicative of a request to retrieve a bill. The data indicative of a request to retrieve a bill may be a bill presentation request. This action request data may be used by the central network to determine one or more subsequent data processing steps.

In some embodiments, the action request data further comprises a trust token request; and wherein the method further comprises, in response to the first request: generating a trust token using a Private Key corresponding to the Public Key; and sending, to the second system, the trust token. The Public Key of this trust token may be the same as the Public Key provided to the first system. Thus, the second system may be authenticated using the Public Key.

In some embodiments, the method further comprises: validating the first request to ensure that the first identification parameter and the second identification parameter were received from the first system and sent to the second system. Validation of the first request may comprise determining that the first identification parameter and the second identification parameter of the first request match the first identification parameter and the second identification parameter of provided by the first system. Further validation may comprise authenticating the second system by any known means to ensure the first request is received from an authorized system.

In some embodiments, the trust token comprises the first identification parameter and the second identification parameter. Thus, the trust token may comprise the Public Key associated with the central network, the first identification parameter, and the second identification parameter. The trust token may therefore be used as a means for the first system to authenticate and/or validate the second system.

In some embodiments, the action request data comprises data indicative of a request to modify a bill. The data indicative of a request to modify a bill may be used by the central network to determine one or more subsequent data processing steps.

In some embodiments, the action request data further comprises bill modification data specifying how the bill is to be modified. The action request data may thus be used by the first system to determine how the bill is to be modified.

In some embodiments, the method further comprises: sending, to the first system, a bill modification request. In some embodiments, the action request data further comprises bill modification data specifying how the bill is to be modified. The first system can use the bill modification data to determine how the bill is to be modified and modify the bill as such. Thus, the central network may facilitate modification of the bill.

In accordance with a second aspect of the present disclosure, there is provided a central network for bill management, the central network arranged to: receive, from a first system, a first message comprising: a first identification parameter; and a second identification parameter; send, to a second system, the first identification parameter and the second identification parameter; receive, from the second system, a first request comprising the first identification parameter, the second identification parameter, and action request data; and perform an action based on the action request data.

In some embodiments, the central network is further arranged to: prior to sending the first identification parameter and the second identification parameter to the second system, store, on a central server, a record of receipt; and after sending the first identification parameter and the second identification parameter to the second system, store, on the central server, a record of transmission.

In some embodiments, the central network is further arranged to: store, on the central server, an index for linking the record of receipt with the record of transmission.

In some embodiments, the central network is further arranged to: receive, from the first system, a second message comprising a Public Key request; and send, to the first system, a Public Key associated with the central network.

In some embodiments, the action request data comprises data indicative of a request to retrieve a bill.

In some embodiments, the action request data further comprises a trust token request; and wherein the method further comprises, in response to the first request: generating a trust token using a Private Key corresponding to the Public Key; and sending, to the second system, the trust token.

In some embodiments, the central network is further arranged to: prior to generating the trust token: validate the first request to ensure that the first identification parameter and the second identification parameter were received from the first system and sent to the second system.

In some embodiments, the trust token comprises the first identification parameter and the second identification parameter.

In some embodiments, the action request data comprises data indicative of a request to modify a bill.

In some embodiments, the action request data further comprises bill modification data specifying how the bill is to be modified.

In some embodiments, the central network is further arranged to: send, to the first system, a bill modification request.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### BRIEF DESCRIPTION OF THE DRAWINGS

The present disclosure will now be described, by way of example only, by reference to the accompanying drawings, in which:
Figure 1 is a schematic representation of a bill management system according to an aspect of the present disclosure;
Figure 2 shows a flow diagram of a bill management process according to an aspect of the present disclosure, using the system of Figure 1; and
Figures 3A and 3B show a flow diagram of a bill presentation method; and
Figure 4 shows a flow diagram of a bill modification method.

### DESCRIPTION OF THE DISCLOSURE

### Bill Management System

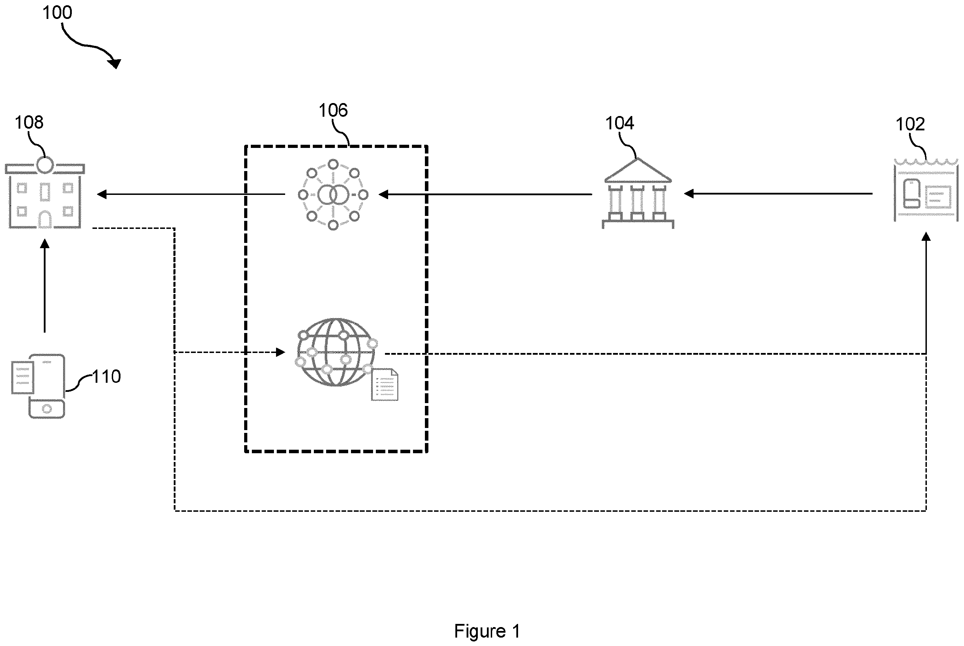

Referring now to Figure 1, a bill management system 100 comprises a merchant platform 102, an acquirer platform 104, a central network 106, a card issuer platform 108, and a user device 110.

Communication between different parties of the bill management system 100 is via one or more secure communication channels. The communication channels are secured using a security protocol, for example Transport Layer Security (TLS). Point-to-point encryption is utilized to encrypt data communicated between different parties. Some data, such as card details associated with a user of the user device 110, are tokenized to further improve security.

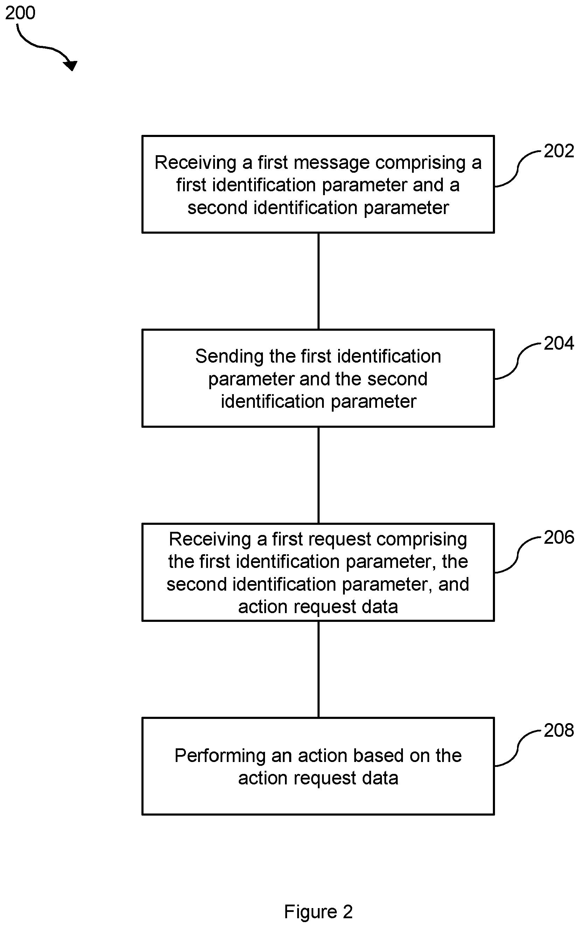

The merchant platform 102 is a platform operated by, or associated with, a merchant. The merchant is a party offering a product or service, such as a streaming service. The merchant platform 102 comprises one or more computing devices arranged to carry out a range of functions. The merchant platform 102 is arranged to communicate a first message to the central network 106, the first message comprising a first identification parameter and a second identification parameter (discussed further with reference to the method 200 of Figure 2). The merchant platform 102 is also arranged to send a second message comprising a Public Key request to the central network 106, and receive, from the central network 106, a Public Key.

The acquirer platform 104 is an entity that processes debit or credit card payment on behalf of the merchant. The acquirer platform 104 can assist the merchant platform 102 in one or more processes.

The central network 106 is a payment processing network arranged to process payment card transactions (e.g., bill payments). The central network 106 comprises one or more payment processor computer devices (not shown), e.g., MPGS computing devices, configured to implement various functions of the central network 106. The central network 106 further comprises a central server for data storage (not shown). The central network 106 is arranged to receive the first message from the merchant platform 102; send the first identification parameter and the second identification parameter to the card issuer platform 108; receive a first request from the card issuer platform 108 comprising the first identification parameter, the second identification parameter, and action request data; and perform an action based on data indicative of the action.

The card issuer platform 108 is operated by, or is associated with, a card issuer that has issued a payment card to a consumer associated with the user device 110. The card issuer platform 108 is associated with a card issuer application. The card issuer platform 108 is arranged to receive the first identification parameter and the second identification parameter from the central network 106; and communicate the first request to the central network 106 comprising the first identification parameter, the second identification parameter, and action request data.

The user device 110 is a device associated with a user or consumer that utilizes a service provided by the merchant. The user device 110 comprises the card issuer application associated with the card issuer platform 108 stored in a memory (not shown). The card issuer application is an application associated with a card issuer that has issued a payment card to the consumer. The card issuer and card issuer application are associated with the card issuer platform 108. The card issuer application is, for example, a mobile banking application or digital wallet.

The user device 110 can also comprise a merchant application, although this is not necessary. The merchant application is an application stored in the memory of the user device 102, associated with a merchant offering a product or service. The merchant application and the merchant are associated with the merchant platform 102. It will be appreciated that the card issuer application can be a card issuer website, and the merchant application can be a merchant website.

In the present example, the user device 110 is a mobile computing device comprising a touch screen (not shown) for receiving user input. It will be appreciated that the user device 110 may be any suitable device, such as a desktop computing device.

### Bill Management Method

Referring now to Figure 2, a flow diagram of a method 200 of bill management is depicted. The method 200 utilizes the bill management system 100. In the example of method 200, the merchant platform 102 offers a service in exchange for a monthly subscription of a monetary amount. For example, the merchant platform 102 offers a streaming service having a monthly subscription of €10.00 a month. The user of the user device 110 is enrolled in the monthly subscription.

In a first step 202 of the method 200, the central network 106 receives, from a first system, a first message comprising: a first identification parameter; and a second identification parameter. The first system is the merchant platform 102. The first message is received via a secure communication channel.

The first identification parameter is a consumer bill account identification parameter. The consumer bill account identification parameter provides a means for identifying a particular bill account associated with the consumer associated with the user device.

The second identification parameter is a bill reference identification parameter. The bill reference identification parameter provides a means for identifying a particular bill associated with a particular consumer, for example the consumer associated with the consumer bill account of the consumer bill account identification parameter.

The first message is an ISO 8583 message. The first identification parameter and the second identification parameter are represented in data elements of the IS 8583 message that are otherwise unused. Accordingly, the first identification parameter and the second identification parameter are sent to the central network 106 via pre-existing communication protocols, without requiring additional infrastructure or bandwidth.

The first message is initiated by the merchant platform 102. In particular, a merchant associated with the merchant platform 102 initiates the ISO 8583 authorisation message for bill payments. The message includes consumer PAN/Token number, bill amount and other ISO 8583 mandatory parameters. Additionally, the merchant includes the bill and biller's consumer account identification parameters which will help to enable bill presentment and payment preferences management via the consumer's mobile banking application or digital wallet. The acquirer platform 104 receives the merchant-initiated authorisation message and routes it to the central network 106. It may be noted that the acquirer platform 104 does not alter or affect this additional bill payment flow, which is managed by the merchant platform 102 and the central network 106.

At step 204, the central network 106 sends, to a second system, the first identification parameter and the second identification parameter. The second system is the card issuer platform 108. The first identification parameter and the second identification parameter are sent via a secure communication channel.

Prior to sending the first identification parameter and the second identification parameter to the card issuer platform 108, the central network 106 stores a record of receipt of the first message. For example, the central network 106 stores a record of receipt in the central server. Similarly, after sending the first identification parameter and the second identification parameter to the card issuer platform 108, the central network 106 stores a record of transmission of the first identification parameter and the second identification parameter in the central server. The central network 106 also stores an index for linking the record of receipt with the record of transmission. Thus, the central network 106 records the flow of the first message from the merchant platform 102 to the central network 106, and the first and second identification parameters from the central network 106 to the card issuer platform 108. This record is useable for later verification to check identification parameters that were part of an initial transaction when an issuer network makes a subsequent call to the central network 106, as discussed further below.

At step 206, the central network 106 receives, from the second system, a first request comprising the first identification parameter, the second identification parameter, and action request data. The second system is the card issuer platform 108. The action request data corresponds to a bill presentation request, or a bill modification request. The bill presentation request is representative of a user's request to view a bill from the merchant. The bill modification request is representative of the user's request to modify the bill.

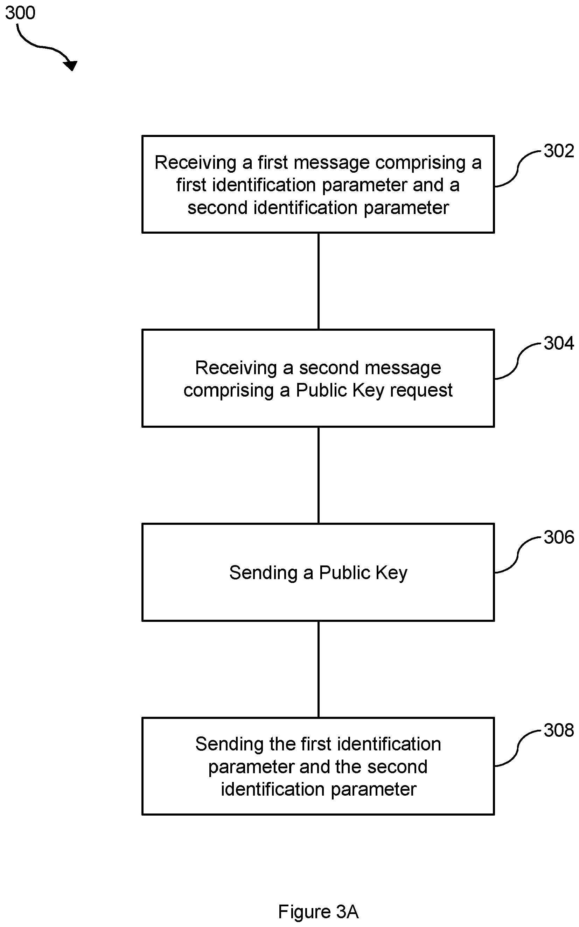

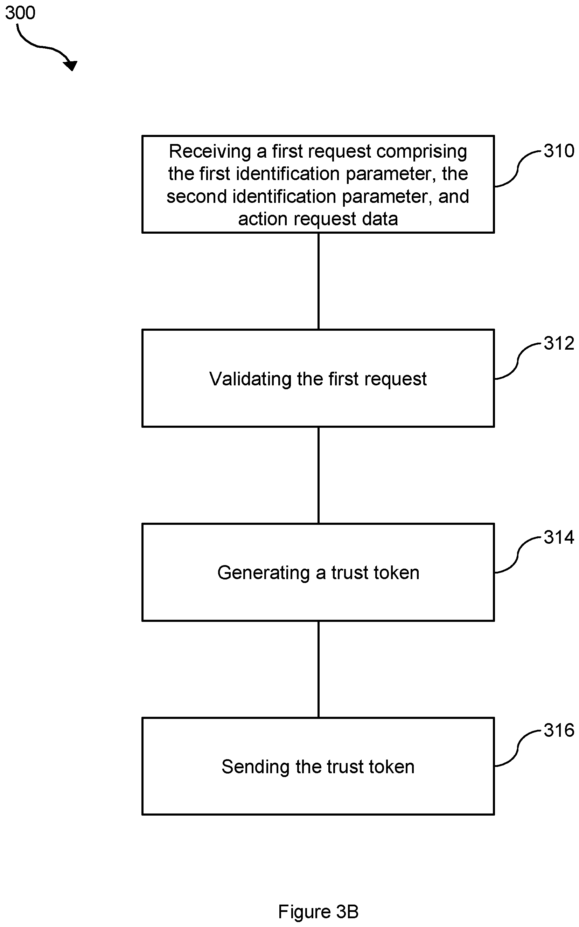

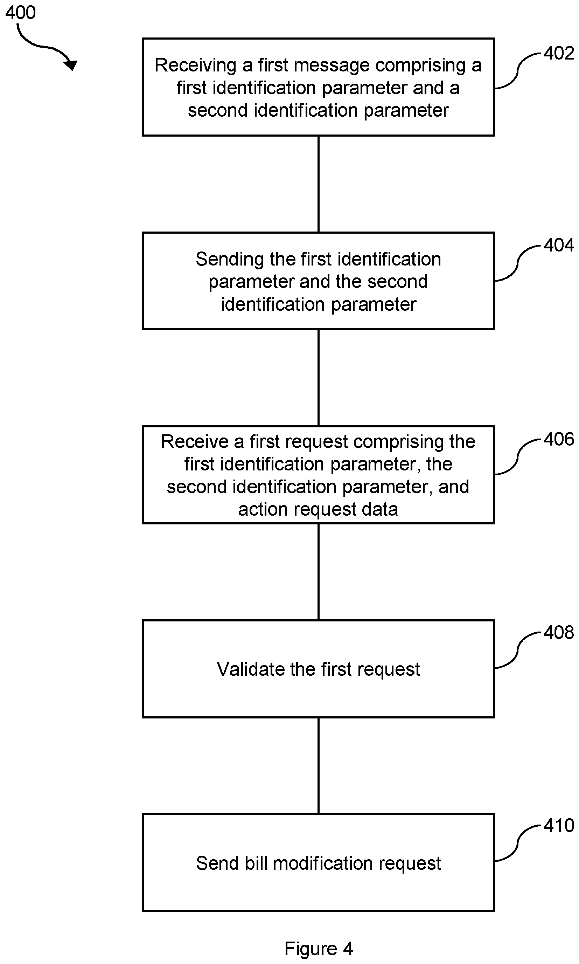

At step 208, the central network 106 performs an action based on the action request data. The action is a bill presentation action or a bill modification action. Figure 3A and 3B depict a flow diagram of a method 300 of performing a bill presentation action. Figure 4 depicts a flow diagram of a method 400 of performing a bill modification action. Depending on the action request data received in step 208. The central network 106 performs the method 300 or the method 400.

### Bill Presentation

Referring to Figures 3A and 3B, a flow diagram of a method 300 of performing a bill presentation action is depicted. The method 300 is executed in response to the central network 106 receiving the first request comprising action request data corresponding to the bill presentation request. For the sake of clarity, the method 300 will be described including the steps of the method 200.

In a first step 302 of the method 300, the central network 106 receives, from the merchant platform 102, a first message comprising: the first identification parameter; and the second identification parameter. The first message is received via a secure communication channel.

At step 304, the central network 106 receives, from the merchant platform 102, a second message comprising a Public Key request. The Public Key request is a request for a Public Key associated with the central network 106. It will be understood that the second message could be part of the first message.

At step 306, the central network 106 sends, to the merchant platform 102, a Public Key associated with the central network 106. For example, the central network 106 sends a Public Key certificate comprising the Public Key. The merchant platform 102 uses the Public Key to verify a trust token (discussed further below).

At step 308, the central network 106 sends, to the card issuer platform 108, the first identification parameter and the second identification parameter. It will be appreciated that step 308 may occur at any point after step 302 (e.g., before step 304 and/or step 306).

Prior to sending the first identification parameter and the second identification parameter to the card issuer platform 108, the central network 106 stores a record of receipt of the first message. For example, the central network 106 stores a record of receipt on the central server. Similarly, after sending the first identification parameter and the second identification parameter to the card issuer platform 108, the central network 106 stores a record of transmission of the first identification parameter and the second identification parameter in the central server. The central network 106 also stores an index for linking the record of receipt with the record of transmission. Thus, the central network 106 records the flow of the first message from the merchant platform 102 to the central network 106, and the first and second identification parameters from the central network 106 to the card issuer platform 108. This record is useable for later verification, check that identification parameters were part of initial transaction initiated by the merchant platform 102 (i.e., the identification parameters of the first message), and to check that the identification parameters match the onboarded dataset, as discussed further below.

At step 310, the central network 106 receives, from the card issuer platform 108, a first request comprising the first identification parameter, the second identification parameter, and action request data. The action request data comprises a trust token request. In this embodiment, the action request data corresponds to the bill presentation request. The bill presentation request is representative of a user's request to view a bill from the merchant.

At step 312, the central network 106 validates the first request. In particular, the central network 106 ensures that the first identification parameter and the second identification parameter was received from the merchant platform 102 and was sent to the card issuer platform 108. To do so, the central network 106 checks that the first identification parameter and the second identification parameter of the first request match the first identification parameter and the second identification parameter stored on the central server after receipt of the first message from the merchant platform 102. The central network 106 also authenticates the card issuer platform 108 via any known means to ensure the first request is received from an authorized issuer network. The first request comprises an issuer signature. The central network 106 verifies the issuer signature and proceeds to step 314 only if the issuer signature is valid.

At step 314, the central network 106 generates a trust token. The trust token is generated using a Private Key corresponding to the Public Key discussed in step 306, such that it can be verified by the merchant platform 102. Since step 312 comprises validating the first request, including authentication of the card issuer platform 108 and verification of the issuer signature, the trust token is only issued to issuer platforms that are trusted and authorized.

The trust token comprises the first identification parameter and the second identification parameter. More particularly, the trust token is associated with the consumer bill account identification parameter and the bill reference identification parameter. These parameters can be used by the merchant platform 102 to determine an appropriate bill document for presentation.

The trust token can also include further data, such as a timestamp representative of a time of creation, a token expiry timestamp, and/or a Public Key identifier. This further data may be useful when the card issuer platform 108 presents the trust token to access a bill document. The merchant platform 102 will verify the trust token by retrieving the correct public certificate. The Public Key identifier can help to retrieve the correct certificate and verify the trust token using the public certificate.

At step 316, the central network 106 sends the trust token to the card issuer platform 108. The central network 106 can also send an endpoint identifier that identifies the merchant server that stores the bill document. The card issuer platform 108 can use the endpoint identifier as a recipient address for a bill presentation request.

The card issuer platform 108 can use the trust token to facilitate bill presentation. In particular, the card issuer platform 108 can send a bill presentation request, following a user interaction with the issuer application on the user device 110, to the merchant platform 102 (or the endpoint identified by the endpoint identifier), the bill presentation request comprising the trust token. The bill presentation request is part of a call made by the issuer application. The merchant platform 102 validates the trust token using the Public Key received in step 306. The merchant platform 102 retrieves a bill document from the merchant server, using the consumer bill account identification parameter and the bill reference identification parameter. The merchant platform 102 returns the bill document to the card issuer platform 108 as part of a response to the call. The card issuer platform 108 can thus present, on the display of the user device 110, the bill document.

### Bill Modification

Referring to Figure 4, a flow diagram of a method 400 of performing a bill modification action is depicted. The method 400 is executed in response to the central network 106 receiving the first request comprising action request data corresponding to the bill modification request. For the sake of clarity, the method 400 will be described including the steps of the method 200.

In a first step 402 of the method 400, the central network 406 receives, from the merchant platform 102, a first message comprising: the first identification parameter; and the second identification parameter. The first message is received via a secure communication channel.

At step 404, the central network 106 sends, to the card issuer platform 108, the first identification parameter and the second identification parameter.

Prior to sending the first identification parameter and the second identification parameter to the card issuer platform 108, the central network 106 stores a record of receipt of the first message. For example, the central network 106 stores a record of receipt in the central server. Similarly, after sending the first identification parameter and the second identification parameter to the card issuer platform 108, the central network 106 stores a record of transmission of the\ first identification parameter and the second identification parameter in the central server. The central network 106 also stores an index for linking the record of receipt with the record of transmission. Thus, the central network 106 records the flow of the first message from the merchant platform 102 to the central network 106, and the first and second identification parameters from the central network 106 to the card issuer platform 108. This record is useable for later verification, as discussed further below.

At step 406, the central network 106 receives, from the issuer platform 108, a first request comprising the first identification parameter, the second identification parameter, and action request data. The action request data comprises bill modification data specifying how a bill is to be modified, for example a bill amount, schedule data and/or any other modifiable aspect of the bill. In this embodiment, the action request data corresponds to the bill modification request.

The bill modification request is representative of a user's request to modify a bill from the merchant.

The issuer platform 108 sends the first request in response to an interaction by the user with the issuer application on the user device 110. For example, the user can interact with the issuer application to amend and/or add bill payment preferences, such as a monetary amount, or a payment schedule. Further amendments or additions may be envisaged. The first request is an API call.

At step 408, the central network 106 validates the first request. In particular, the central network 106 ensures that the API call and message format are in line with an appropriate API spec. The central network 106 may also ensure that the first identification parameter and the second identification parameter in the first request match those received from the merchant platform 102 and sent to the card issuer platform 108.

At step 410, the central network 106 sends, to the merchant platform 102, a bill modification request. The bill modification request is sent via an API call, using an endpoint associated with the merchant platform 102, the API call comprising parameters that the merchant platform 102 can use to modify the consumer's bill.

Upon receipt of the bill modification request from the central network 106, the merchant platform 102 can proceed with modifying the consumer's bill. The parameters comprised in the API call can be used to identify the appropriate storage location of the consumer's bill. The API also comprises details on the modification to be made. The merchant platform 102 determines that the modification details are acceptable, for example in line with business rules. The merchant platform accepts or rejects the modification. If accepted, subsequent bills are based on the modified details.

Once the bill has been modified, the merchant platform 102 may communicate a modification confirmation, rejection, or failure to the central network 106, which may in turn communicate the modification confirmation, rejection, or failure to the card issuer network 108. The issuer application may provide the modification confirmation, rejection, or failure to the user device 110.

In general, the routines executed to implement the embodiments of the invention, whether implemented as part of an operating system or a specific application, component, program, object, module, or sequence of instructions, or even a subset thereof, may be referred to herein as "computer program code," or simply "program code." Program code typically comprises computer readable instructions that are resident at various times in various memory and storage devices in a computer and that, when read and executed by one or more processors in a computer, cause that computer to perform the operations necessary to execute operations and/or elements embodying the various aspects of the embodiments of the invention. The computer readable program instructions for carrying out operations of the embodiments of the invention may be, for example, assembly language or either source code or object code is written in any combination of one or more programming languages.

The program code embodied in any of the applications/modules described herein is capable of being individually or collectively distributed as a program product in a variety of different forms. In particular, the program code may be distributed using the computer readable storage medium having the computer readable program instructions thereon for causing a processor to carry out aspects of the embodiments of the invention.

Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other robust state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer-readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions/acts specified in the flowcharts, sequence diagrams, and/or block diagrams. The computer program instructions may be provided to one or more processors of a general-purpose computer, special purpose computer, or other programmable data processing apparatus to produce a machine, such that the instructions, which execute via the one or more processors, cause a series of computations to be performed to implement the functions and/or acts specified in the flowcharts, sequence diagrams, and/or block diagrams.

In certain alternative embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more, or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context indicates otherwise. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While a description of various embodiments has illustrated all of the inventions and while these embodiments have been described in considerable detail, it is not the intention to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the general inventive concept.

## Claims

1. A method of bill management by a central network, the method comprising the steps of:
receiving, from a first system, a first message comprising:
a first identification parameter; and
a second identification parameter;
sending, to a second system, the first identification parameter and the second identification parameter;
receiving, from the second system, a first request comprising the first identification parameter, the second identification parameter, and action request data; and
performing an action based on the action request data.

2. The method of claim 1, further comprising:
prior to sending the first identification parameter and the second identification parameter to the second system, storing, on a central server, a record of receipt; and
after sending the first identification parameter and the second identification parameter to the second system, storing, on the central server, a record of transmission.

3. The method of claim 2, further comprising:
storing, on the central server, an index for linking the record of receipt with the record of transmission.

4. The method of any claim 2 or claim 3, further comprising:
receiving, from the first system, a second message comprising a Public Key request; and
sending, to the first system, a Public Key associated with the central network.

5. The method of claim 4, wherein the action request data comprises data indicative of a request to retrieve a bill.

6. The method of claim 5, wherein the action request data further comprises a trust token request; and wherein the method further comprises, in response to the first request:
generating a trust token using a Private Key corresponding to the Public Key; and
sending, to the second system, the trust token.

7. The method of claim 6, further comprising, prior to generating the trust token:
validating the first request to ensure that the first identification parameter and the second identification parameter were received from the first system and sent to the second system.

8. The method of claim 6 or claim 7, wherein the trust token comprises the first identification parameter and the second identification parameter.

9. The method of claim 1, wherein the action request data comprises data indicative of a request to modify a bill.

10. The method of claim 9, wherein the action request data further comprises bill modification data specifying how the bill is to be modified.

11. The method of claim 9 or claim 10, further comprising:
sending, to the first system, a bill modification request.

12. A central network for bill management, the central network arranged to:
receive, from a first system, a first message comprising:
a first identification parameter; and
a second identification parameter;
send, to a second system, the first identification parameter and the second identification parameter;
receive, from the second system, a first request comprising the first identification parameter, the second identification parameter, and action request data; and
perform an action based on the action request data.

13. The central network of claim 12, further arranged to:
prior to sending the first identification parameter and the second identification parameter to the second system, store, on a central server, a record of receipt; and
after sending the first identification parameter and the second identification parameter to the second system, store, on the central server, a record of transmission.

14. The central network of claim 13, further arranged to:
store, on the central server, an index for linking the record of receipt with the record of transmission.

15. The central network of claim 13 or claim 14, further arranged to:
receive, from the first system, a second message comprising a Public Key request; and
send, to the first system, a Public Key associated with the central network.

16. The central network of claim 15, wherein the action request data comprises data indicative of a request to retrieve a bill.

17. The central network of claim 16, wherein the action request data further comprises a trust token request; and wherein the central network is further arranged to, in response to the first request:
generate a trust token using a Private Key corresponding to the Public Key; and
send, to the second system, the trust token.

18. The central network of claim 17, further arranged to, prior to generating the trust token:
Validate the first request to ensure that the first identification parameter and the second identification parameter were received from the first system and sent to the second system.

19. The central network of claim 17 or claim 18, wherein the trust token comprises the first identification parameter and the second identification parameter.

20. The central network of claim 12, wherein the action request data comprises data indicative of a request to modify a bill.

21. The central network of claim 20, wherein the action request data further comprises bill modification data specifying how the bill is to be modified.

22. The central network of claim 20 or claim 21, further arranged to:
send, to the first system, a bill modification request.
